# EUROPEAN PATENT APPLICATION

(11) **EP 4 779 700 A1**
(43) Date of publication of application: **22.07.2026**
(21) Application number: 24943660.1
(22) Date of filing: 11.12.2024
(51) Int. Cl.: H01M 4/13, H01M 4/139

(54) **POSITIVE ELECTRODE SHEET AND MANUFACTURING METHOD THEREFOR, AND BATTERY CELL**

(30) Priority: 29.10.2024 CN 202411529190
(71) Applicant: HUIZHOU EVE POWER CO., LTD, Huizhou, Guangdong 516039 (CN)
(72) Inventor: XU, Xinxin, Huizhou, Guangdong 516039 (CN); HU, Qi, Huizhou, Guangdong 516039 (CN); LIU, Ziwen, Huizhou, Guangdong 516039 (CN); LIU, Jincheng, Huizhou, Guangdong 516039 (CN)
(74) Representative: Stöckeler, Ferdinand
(86) International application number: PCT/CN2024/138512
(87) International publication number: WO 2026/091246

(57) **Abstract**

The present application provides a positive electrode sheet, a preparation method thereof, and a battery cell. The positive electrode sheet includes a current collector, and a first film layer and a second film layer sequentially arranged on the current collector. The material of the first film layer includes a lithium-rich manganese-based material, and the material of the second film layer includes a lithium transition metal phosphate.

## Description

This application claims the priority to and benefit of Chinese Patent Application No. 202411529190.6, filed with China Patent Office on October 29, 2024, the entire contents of which is incorporated herein by reference.

### TECHNICAL FIELD

The present application relates to the technical field of battery, and in particular to a positive electrode sheet and a preparation method thereof, and a battery cell.

### BACKGROUND

Lithium transition metal phosphates with olivine structure have the advantages of being non-toxic, pollution-free, highly safe and low-cost, and are considered to be promising cathode materials for lithium-ion batteries. However, the rapid decay of the cycle capacity of lithium transition metal phosphate materials has seriously hindered their application. To address this problem, one of the improvement methods in the relevant technology is to directly blend lithium-rich manganese-based materials to compensate for the loss of active lithium in lithium transition metal phosphate materials, thereby improving the long-cycle performance of the lithium transition metal phosphate system.

### SUMMARY

However, due to the poor intrinsic electronic and ion conductivity of lithium transition metal phosphates, the degree of polarization during the charge and discharge process is large. Direct mixing with lithium-rich manganese-based materials can easily lead to overcharging of the lithium-rich manganese-based materials, resulting in a large and irreversible phase change of Li₂MnO₃, a rapid decay of the material structure, and a large loss of active lithium, which is not conducive to long-cycle lithium replenishment.

The present application provides a positive electrode sheet, including a current collector and a first film layer and a second film layer sequentially arranged on the current collector. The material of the first film layer includes a lithium-rich manganese-based material, and the material of the second film layer includes a lithium transition metal phosphate.

The present application also provides a preparation method of a positive electrode sheet, including the following steps: providing a current collector and a first film layer slurry, applying the first film layer slurry on at least one side of the current collector to obtain a first film layer on the current collector, the first film layer slurry including a lithium-rich manganese-based material; providing a second film layer slurry, applying the second film layer slurry on the side of the first film layer facing away from the current collector to obtain the positive electrode sheet, the second film layer slurry including a lithium transition metal phosphate.

The present application also provides a battery cell, comprising the above-mentioned positive electrode sheet, or a positive electrode sheet prepared according to the above-mentioned preparation method of the positive electrode sheet.

### BENEFICIAL EFFECT

According to the positive electrode sheet provided in the present application, the lithium transition metal phosphate and the lithium-rich manganese-based material can be arranged in separate layers based on a separate-layer arrangement, thereby reducing the probability of lattice cracks caused by the difference in expansion and contraction between the two when directly mixed, and maintaining the stability of the conductive network; by placing the lithium transition metal phosphate in the second film layer and the lithium-rich manganese-based material in the first film layer, the overcharge of the lithium-rich manganese-based material can be effectively alleviated, the structural stability of the lithium-rich manganese-based material can be maintained, and the Li₂MnO₃ phase can slowly release lithium, thereby stably and persistently replenishing lithium for the lithium transition metal phosphate.

### BRIEF DESCRIPTION OF THE DRAWINGS

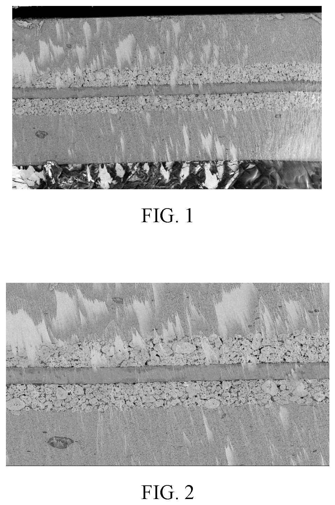

FIG. 1 is a scanning electron microscope (SEM) image of a cross section of a positive electrode sheet provided in Example 1 of the present application (which is magnified 3000 times).
FIG. 2 is a scanning electron microscope (SEM) image of a cross section of a positive electrode sheet provided in Example 1 of the present application (which is magnified 5000 times).

### DETAILED DESCRIPTION OF THE EMBODIMENTS

In the description of this embodiment, the terms "upper", "lower", "left", "right", "front", "rear" and other directions or positional relationships are based on the directions or positional relationships shown in the drawings, and are for the convenience of description and simplification of operation, rather than indicating or implying that the device or element referred to must have a specific direction, be constructed and operate in a specific direction, and therefore cannot be understood as limiting the present application. In addition, the terms "first" and "second" are used to distinguish in the description and have no special meaning.

The technical solution of this application is as follows.

In a first aspect, an embodiment of the present application provides a positive electrode sheet, including a current collector, and a first film layer and a second film layer sequentially arranged on the current collector. The material of the first film layer includes a lithium-rich manganese-based material, and the material of the second film layer includes a lithium transition metal phosphate.

In the present application, the particles of lithium transition metal phosphate and layered oxide (lithium-rich manganese-based material) are different in size, and the expansion and contraction degrees of the particles are quite different. The particles can be arranged in a directional manner by layering, thereby reducing the probability of lattice cracks caused by the difference in expansion and contraction between the two during direct mixing, and maintaining the stability of the conductive network; by placing the lithium transition metal phosphate in the second film layer and the lithium-rich manganese-based material in the first film layer, the overcharge of the lithium-rich manganese-based material can be effectively alleviated, the structural stability of the lithium-rich manganese-based material can be maintained, and the Li₂MnO₃ phase can slowly release lithium, thereby stably and persistently replenishing lithium for the phosphate.

In some embodiments, the material of the first film layer further includes lithium manganate.

In the present application, since lithium transition metal phosphate has poor electronic and ion conductivity, and lithium manganate has much better ion conductivity than lithium transition metal phosphate, arranging lithium manganate in the first film layer effectively improves the low-temperature performance of lithium transition metal phosphate in the second film layer. At the same time, lithium manganate and lithium transition metal phosphate have different particle sizes, and the expansion and contraction degrees of the particles are quite different. The particles can be arranged in a directional manner based on a separate-layer arrangement, which reduces the probability of lattice cracks caused by the difference in expansion and contraction of the particles of the two during direct mixing, and maintains the stability of the conductive network.

In some embodiments, the material of the first film layer further includes lithium transition metal phosphate, and the mass ratio of the lithium transition metal phosphate to the lithium-rich manganese-based material in the first film layer is A:C, where 0<A≤40, 20<C<99.

In the present application, the type of lithium transition metal phosphate in the first film layer may be the same as or different from the type of lithium transition metal phosphate in the second film layer. The particle size of the lithium manganate and the particle size of the lithium-rich manganese-based material are larger than that of the lithium transition metal phosphate, and mixing a small amount of lithium transition metal phosphate can increase the compaction density of the electrode sheet.

In some embodiments, the lithium transition metal phosphate is in a granular form, and the ratio of the minimum to the maximum of the Martin diameter of the lithium transition metal phosphate is (0.1~0.6):1, for example, it may be 0.1:1, 0.2:1, 0.3:1, 0.4:1, 0.5:1, 0.6:1, etc. Within this range, a combination of large and small particles can be achieved in the first film layer, thereby improving the compaction density of the electrode sheet.

In some embodiments, the lithium transition metal phosphate is in a granular form, and the particle size D50 of the lithium transition metal phosphate is in a range from 0.5 µm to 2 µm. Within this range, a combination of large and small particles can be achieved in the first film layer, thereby increasing the compaction density of the electrode sheet.

In some embodiments, the lithium-rich manganese-based material is in granular form, and the ratio of the minimum to the maximum of the Martin diameter of the lithium-rich manganese-based material is in a range from 0.2 to 0.8, for example, it may be 0.2, 0.3, 0.4, 0.5, 0.6, 0.7, 0.8. Within this range, a combination of large and small particles can be achieved in the first film layer, thereby improving the compaction density of the electrode sheet.

In some embodiments, the particle size D50 of primary particles of the lithium-rich manganese-based material is in a range from 100 nm to 800 nm, for example, it may be 100 nm, 200 nm, 300 nm, 400 nm, 500 nm, 600 nm, 700 nm, 800 nm, etc. The particle size D50 of secondary particles of the lithium-rich manganese-based material is in a range from 4 µm to 9 µm, for example, it may be 4 µm, 5 µm, 6 µm, 7 µm, 8 µm, 9 µm, etc. In this application, the secondary particles are agglomerated by the primary particles. Within this range, the particles in the first film layer can be matched in size, thereby improving the compaction density of the electrode sheet.

In some embodiments, the material of the second film layer further includes a lithium supplement agent.

In the present application, the lithium supplement agent can make up for the active lithium lost in the formation of the solid electrolyte interphase (SEI) film at the initial stage of the cycle, thereby improving the initial efficiency of the battery and the capacity retention rate of the system.

In some embodiments, the lithium supplement agent includes one or more of Li₂O and Li₂O₂.

In some embodiments, the material of the first film layer also includes a first conductive agent and a first adhesive agent, and the mass percentage ratio of the lithium transition metal phosphate, lithium manganite, lithium-rich manganese-based material, the first conductive agent and the first adhesive agent in the first film layer is A:B:C:D:(1-A-B-C-D), where 0<A≤40%, 0≤B≤40%, 20%<C<99%, 0<D≤7%, 0<1-A-B-C-D≤7%.

In some embodiments, the material of the second film layer also includes a second conductive agent and a second adhesive agent, and the mass percentage ratio of the lithium transition metal phosphate, the lithium supplement agent, the second conductive agent and the second adhesive agent in the second film layer is X:Y:Z:(1-X-Y-Z), where 90%≤X≤98%, 0<Y≤1%, 0<Z≤3%, 0<1-X-Y-Z≤4%.

In the present application, the type of the first conductive agent and the type of the second conductive agent may be the same or different. The type of the first adhesive agent and the type of the second adhesive agent may be the same or different.

As an example, the conductive agent in the material of the first film layer and the conductive agent in the material of the second film layer each independently include one or more of superconducting carbon, acetylene black, carbon black, Ketjen black, carbon dots, carbon nanotubes, graphene and carbon nanofibers.

As an example, the adhesive agent in the material of the first film layer and the adhesive agent in the material of the second film layer each independently include one or more of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer and fluorine-containing acrylate resin.

In some embodiments, the mass ratio of the lithium transition metal phosphate, the lithium supplement agent, the conductive agent, and the adhesive agent in the second film layer is 96.8:0.7:1:1.5.

In some embodiments, the mass ratio of the second film layer to the first film layer is in a range of (3~18): 2. As an example, the mass ratio of the second film layer to the first film layer is 3:2, 4:2, 5:2, 6:2, 7:2, 8:2, 9:2, 10:2, 11:2, 12:2, 13:2, 14:2, 15:2, 16:2, 17:2 or 18:2.

In some embodiments, the mass ratio of the second film layer to the first film layer is 7:3.

In some embodiments, the ratio of the sum of the thickness of the first film layer and the thickness of the second film layer to the thickness of the current collector is in a range of (10~80):1, for example, it may be 10:1, 20:1, 30:1, 40:1, 50:1, 60:1, 70:1, 80:1, etc.

In some embodiments, the ratio of the sum of the thickness of the first film layer and the thickness of the second film layer to the thickness of the current collector is 25:1.

In some embodiments, the surface density of the first film layer is in a range from 20 g/m² to 120 g/m², for example, 20 g/m², 30 g/m², 40 g/m², 50 g/m², 60 g/m², 70 g/m², 80 g/m², 90 g/m², 100 g/m², 110 g/m², 120 g/m², etc. The surface density of the second film layer is in a range from 90 g/m² to 250 g/m², for example, 90 g/m², 110 g/m², 130 g/m², 150 g/m², 170 g/m², 190 g/m², 210 g/m², 230 g/m², 250 g/m², etc.

In some embodiments, the chemical formula of the lithium transition metal phosphate is LiMn_{(1-x-y)}FeₓM_{y}PO₄, where the M includes one or more metal elements, 0.8≥1-x-y≥0.2, 0.8≥x≥0.2, and y≤0.1.

In some embodiments, the M includes but is not limited to at least one of Ti, Zr, Al, K, and Mg.

In some embodiments, the chemical formula of the lithium-rich manganese-based material is Li_{d}NiₐCo_{b}Mn_{c}A_{(1-a-b-c)}O₂, where the A includes one or more metal elements, 1.5>d>0, 1≥a≥0, 0.3≥b≥0, 1≥c≥0, 0.1≥1-a-b-c.

In some embodiments, the A includes but is not limited to at least one of Ti, W, Al, K, and Mg.

In some embodiments, the primary particles of the lithium-rich manganese-based material are in the shape of strips, which can reduce side reactions and improve the kinetic performance of the battery.

In the present application, the primary particles of the lithium-rich manganese-based material may be in the shape of a regular rectangular parallelepiped or an irregular strip.

In some embodiments, the chemical formula of lithium manganate is LiMn_{(2-y)}D_{y}O₄, where the D includes one or more metal elements, and y≤0.1.

In some embodiments, the D includes but is not limited to at least one of Co, Cr, Ti, Al, and V.

In some embodiments, particles with a particle size of 0.5 µm to 2 µm in the first film layer account for 30% to 70%, for example, 30%, 40%, 50%, 60%, 70%, etc.

In some embodiments, particles with a particle size of 0.1 µm to 1 µm in the second film layer account for 30% to 70%, for example, 30%, 40%, 50%, 60%, 70%, etc.

In some embodiments, the open porosity of the positive electrode sheet is 15% to 40%, for example, 15%, 20%, 25%, 30%, 35%, 40%, etc., and the open porosity ratio of the second film layer to the first film layer is in a range from 0.8 to 1.5, for example, 0.8, 0.9, 1.0, 1.1, 1.2, 1.3, 1.4, 1.5, etc. Within this range, the porosity of the electrode sheet is moderate, so that the electrode sheet can have a suitable impedance and a small energy density.

In some embodiments, the specific adhesion of the positive electrode sheet is in a range from 0.05 to 40, for example, it may be 0.05, 5, 10, 15, 20, 25, 30, 35, 40, etc. The specific adhesion of the positive electrode sheet = the weight percentage A (%) of the adhesive agent in the electrode sheet / the peeling force B (N) of the electrode sheet.

In some embodiments, the powder resistivity of the positive electrode sheet after powder scraping is smaller than or equal to 300000 Ω·cm, for example, it may be 250000 Ω·cm, 200000 Ω·cm, 150000 Ω·cm, 100000 Ω·cm, 50000 Ω·cm, etc.

In a second aspect, an embodiment of the present application provides a preparation method of a positive electrode sheet, including the following steps:
S1, providing a current collector and a first film layer slurry, applying the first film layer slurry on at least one side of the current collector to obtain a first film layer on the current collector, the first film layer slurry including a lithium-rich manganese-based material;
S2, providing a second film layer slurry, and applying the second film layer slurry on a side of the first film layer facing away from the current collector to obtain the positive electrode sheet, the second film layer slurry including a lithium transition metal phosphate.

In Step S1,
in some embodiments, the material of the first film layer further includes lithium manganate;
in some embodiments, the material of the first film layer further includes lithium transition metal phosphate;
in some embodiments, the first film layer slurry further includes a conductive agent and an adhesive agent;
in some embodiments, the preparation of the first film layer slurry includes the following steps:
   providing and mixing a lithium-rich manganese-based material, a lithium manganate, a lithium transition metal phosphate, a conductive agent, an adhesive agent and a solvent to obtain the first film layer slurry;
   in some embodiments, applying the first film layer slurry on at least one side of the current collector to obtain the first film layer on the current collector, includes:
      coating the first film layer slurry on at least one side of the current collector and drying the first film layer slurry to obtain the first film layer on the current collector;
      in some embodiments, the drying temperature is 80 °C to 140 °C, for example, it may be 80 °C, 90 °C, 100 °C, 110 °C, 120 °C, 130 °C, 140 °C, etc., and the drying time is 8h to 24h, for example, it may be 8h, 10h, 12h, 14h, 16h, 18h, 20h, 22h, 24h, etc.

In Step S2,
in some embodiments, the material of the second film layer further includes a lithium supplement agent;
in some embodiments, the second film layer slurry further includes a conductive agent and an adhesive agent;
in some embodiments, the preparation of the second film layer slurry includes the following steps:
   providing and mixing a lithium transition metal phosphate, a lithium supplement agent, a conductive agent, an adhesive agent and a solvent to obtain the second film layer slurry;
   in some embodiments, applying the second film layer slurry on the side of the first film layer facing away from the current collector to obtain the positive electrode sheet, includes:
      coating the second film layer slurry on the side of the first film layer facing away from the current collector, and drying and rolling the second film layer slurry to obtain the positive electrode sheet;
      in some embodiments, the drying temperature is 80 °C to140 °C, for example, it may be 80 °C, 90 °C, 100 °C, 110 °C, 120 °C, 130 °C, 140 °C, etc., and the drying time is 8h to 24h, for example, it may be 8h, 10h, 12h, 14h, 16h, 18h, 20h, 22h, 24h, etc.

In the preparation method of the positive electrode sheet, the lithium-rich manganese-based material, lithium manganate, lithium transition metal phosphate, conductive agent and adhesive agent used in the first film layer and the lithium transition metal phosphate, lithium supplement agent, conductive agent and adhesive agent used in the second film layer are as described above.

In a third aspect, an embodiment of the present application provides a battery cell including the above-mentioned positive electrode sheet.

### Embodiment 1

A preparation method of a positive electrode sheet includes the following steps:
(1) preparing the first film layer slurry, which includes uniformly dispersing lithium transition metal phosphate material (LiMn_{0.6}Fe_{0.4}PO₄ whose ratio of minimum to maximum of Martin diameter is 0.4 and whose particle size D50 is 1.5 µm), lithium manganate material (LiMn₂O₄), lithium-rich manganese-based material (chemical formula: 0.15Li₂MnO₃•0.85LiMnO₂, a ratio of minimum to maximum of Martin diameter is 0.6, a particle size D50 of primary particles is 500 nm, and a particle size D50 of secondary particles is 6 µm), conductive carbon black (sp) and polyvinylidene fluoride (PVDF) in N-methylpyrrolidone (NMP) solvent to prepare a slurry, in which the mass ratio of the lithium transition metal phosphate material, the lithium manganate material, the lithium-rich manganese-based material, the conductive carbon black (sp) and the polyvinylidene fluoride (PVDF) is 10:21:67:0.8:1.2;
(2) preparing the second film layer slurry, which includes uniformly dispersing lithium transition metal phosphate material (LiMn_{0.6}Fe_{0.4}PO₄ whose ratio of minimum to maximum of Martin diameter is 0.4 and whose particle size D50 is 1.5 µm) , Li₂O, conductive carbon black (sp), and polyvinylidene fluoride (PVDF) in N-methylpyrrolidone (NMP) to prepare a slurry, in which the mass ratio of lithium transition metal phosphate material, Li₂O, conductive carbon black (sp), and polyvinylidene fluoride (PVDF) is 96.8:0.7:1:1.5;
(3) evenly coating the first film layer slurry on a surface of an aluminum foil, and drying it at 110 °C for 16 hours to form the first film layer;
(4) evenly coating the second film layer slurry (the mass ratio of the lithium transition metal phosphate material, lithium manganate material, lithium-rich manganese-based material, conductive carbon black (sp) and polyvinylidene fluoride (PVDF) in the second film layer slurry to the lithium transition metal phosphate material, Li₂O, conductive carbon black (sp) and polyvinylidene fluoride (PVDF) in the first film layer slurry is 7:3) on the surface of the first film layer, drying it at 110 °C for 16 hours, and then rolling it to form the positive electrode sheet (the ratio of the sum of the thickness of the first film layer and the thickness of the second film layer to the thickness of the current collector is 45:1, the surface density of the first film layer is 70 g/m², and the surface density of the second film layer is 170 g/m²).

A preparation method of a battery cell includes the following steps:
(1) preparing a negative electrode sheet, which includes mixing graphite, conductive agent (acetylene black), adhesive agent (carboxymethyl cellulose (CMC)), and SBR (styrene butadiene rubber) in a mass ratio of 96:1:1.2:1.8, and then introducing deionized water as a solvent and evenly stirring it to prepare a slurry;
(2) evenly coating the slurry on the surface of a copper foil, and then drying and rolling it to form the negative electrode sheet, where the drying temperature is 90 °C and the drying time is 10 hours;
(3) assembling, which includes winding the positive electrode sheet, the negative electrode sheet and the separator to obtain a bare cell, placing the bare cell in a packaging housing, drying it, and injecting an electrolyte; performing vacuum packaging, standing, forming and shaping processes to obtain the battery cell, where the electrolyte is prepared by dissolving LiPF₆ in an organic solvent mixed with ethylene carbonate (EC), ethyl methyl carbonate (EMC) and diethyl carbonate (DEC) in a volume ratio of 1:1:1.

### Embodiment 2

This embodiment is basically the same as Embodiment 1, except that the first film layer slurry in this embodiment does not contain lithium manganate and lithium transition metal phosphate, and the mass ratio of lithium-rich manganese-based material, conductive carbon black (sp) and polyvinylidene fluoride (PVDF) is 98:0.8:1.2.

### Embodiment 3

This embodiment is basically the same as Embodiment 1, except that the first film layer slurry in this embodiment does not contain lithium manganate, and the mass ratio of lithium transition metal phosphate material, lithium-rich manganese-based material, conductive carbon black (sp) and polyvinylidene fluoride (PVDF) is 10:88:0.8:1.2.

### Embodiment 4

This embodiment is basically the same as Embodiment 1, except that the first film layer slurry in this embodiment does not contain lithium transition metal phosphate, and the mass ratio of lithium manganate material, lithium-rich manganese-based material, conductive carbon black (sp) and polyvinylidene fluoride (PVDF) is 21:77:0.8:1.2.

### Embodiment 5

This embodiment is basically the same as Embodiment 1, except that the mass ratio of lithium transition metal phosphate material, lithium manganate material, lithium-rich manganese-based material, conductive carbon black (sp) and polyvinylidene fluoride (PVDF) in the first film layer slurry in this embodiment is 37:40:21:0.8:1.2.

### Embodiment 6

This embodiment is basically the same as Embodiment 1, except that the mass ratio of lithium transition metal phosphate material, lithium manganate material, lithium-rich manganese-based material, conductive carbon black (sp) and polyvinylidene fluoride (PVDF) in the first film layer slurry in this embodiment is 29:2:67:0.8:1.2.

### Embodiment 7

This embodiment is basically the same as Embodiment 1, except that the mass ratio of lithium transition metal phosphate material, lithium manganate material, lithium-rich manganese-based material, conductive carbon black (sp) and polyvinylidene fluoride (PVDF) in the first film layer slurry in this embodiment is 20:21:57:0.8:1.2.

### Embodiment 8

This embodiment is basically the same as Embodiment 1, except that the mass ratio of lithium transition metal phosphate material, lithium manganate material, lithium-rich manganese-based material, conductive carbon black (sp) and polyvinylidene fluoride (PVDF) in the first film layer slurry in this embodiment is 2:21:75:0.8:1.2.

### Embodiment 9

This embodiment is basically the same as Embodiment 1, except that the mass ratio of the lithium transition metal phosphate material, Li₂O, conductive carbon black (sp), and polyvinylidene fluoride (PVDF) in the second film layer slurry in this embodiment is 90:0.7:1:1.5.

### Embodiment 10

This embodiment is basically the same as Embodiment 1, except that the mass ratio of lithium transition metal phosphate material, Li₂O, conductive carbon black (sp), and polyvinylidene fluoride (PVDF) in the second film layer slurry in this embodiment is 98:0.7:1:1.5.

### Embodiment 11

This embodiment is basically the same as Embodiment 1, except that the mass ratio of lithium transition metal phosphate material, Li₂O, conductive carbon black (sp), and polyvinylidene fluoride (PVDF) in the second film layer slurry in this embodiment is 96.8:0.1:1:1.5.

### Embodiment 12

This embodiment is basically the same as Embodiment 1, except that the mass ratio of lithium transition metal phosphate material, Li2O, conductive carbon black (sp), and polyvinylidene fluoride (PVDF) in the second film layer slurry in this embodiment is 96.8:1:1:1.5.

### Embodiment 13

This embodiment is basically the same as Embodiment 1, except that the mass ratio of the combination of the lithium transition metal phosphate material, lithium manganate material, lithium-rich manganese-based material, conductive carbon black (sp) and polyvinylidene fluoride (PVDF) in the second film layer slurry to the combination of the lithium transition metal phosphate material, Li₂O, conductive carbon black (sp) and polyvinylidene fluoride (PVDF) used in the first film layer slurry in this embodiment is 9:1.

### Embodiment 14

This embodiment is basically the same as Embodiment 1, except that the mass ratio of the combination of the lithium transition metal phosphate material, lithium manganate material, lithium-rich manganese-based material, conductive carbon black (sp) and polyvinylidene fluoride (PVDF) in the second film layer slurry to the combination of the lithium transition metal phosphate material, Li₂O, conductive carbon black (sp) and polyvinylidene fluoride (PVDF) in the first film layer slurry in this embodiment is 3:2.

### Embodiment 15

This embodiment is basically the same as Example 1, except that the mass ratio of the lithium transition metal phosphate material, the lithium manganate material, the lithium-rich manganese-based material, the conductive carbon black (sp) and the polyvinylidene fluoride (PVDF) in the first film layer slurry in this embodiment is 80:0:20:0.8:1.2.

### Embodiment 16

This embodiment is basically the same as Example 1, except that the mass ratio of the lithium transition metal phosphate material, Li₂O, conductive carbon black (sp), and polyvinylidene fluoride (PVDF) in the second film layer slurry in this embodiment is 99:0:0.5:0.5.

### Embodiment 17

This embodiment is basically the same as Example 1, except that the mass ratio of the combination of the lithium transition metal phosphate material, lithium manganate material, lithium-rich manganese-based material, conductive carbon black (sp) and polyvinylidene fluoride (PVDF) in the second film layer slurry to the combination of the lithium transition metal phosphate material, Li₂O, conductive carbon black (sp) and polyvinylidene fluoride (PVDF) in the first film layer slurry in this embodiment is 3:8.

### Comparative Example 1

This comparative example is basically the same as Example 1, except that the coating material of the positive electrode sheet in this comparative example does not contain lithium manganate material and lithium-rich manganese-based material, and only contains one layer of coating (i.e., the first film layer slurry and the second film layer slurry are mixed together for coating).

### Comparative Example 2

This comparative example is basically the same as Example 1, except that the first film layer slurry and the second film layer slurry in this comparative example are mixed together for coating.

### Comparative Example 3

This comparative example is basically the same as Example 1, except that the positions of the first film layer and the second film layer in this comparative example are exchanged.

### Test Example:

The positive electrode sheets obtained in the embodiments and comparative examples are subjected to a roller peeling force test, where the weight percentage of the adhesive agent in the electrode sheet is defined as A (%), the value of the sheet peeling force is defined as B (N), the specific adhesion force C of the electrode sheet is defined as C=A/B, and the test results of the specific adhesion force C of the electrode sheet are shown in Table 1.

The battery cells obtained in the embodiments and comparative examples are placed in a 45 °C incubator, charged to 4.25V at constant current and constant voltage based on 1C charging, and then discharged to 2.5V based on 1C discharging. The discharge capacity in the first week is A, and after 1000 cycles, the discharge capacity is B, so the capacity retention rate is B/A*100%, as shown in Table 1.

**Table 1 [0124]**

| | Specific Adhesive Strength | Capacity Retention Rate after 1000 cycles of 1C Charging and Discharging at 45 °C |
|---|---|---|
| Embodiment 1 | 0.322 | 100.7% |
| Embodiment 2 | 0.32 | 97.3% |
| Embodiment 3 | 0.324 | 97.7% |
| Embodiment 4 | 0.322 | 98.1% |
| Embodiment 5 | 0.365 | 99.7% |
| Embodiment 6 | 0.319 | 98.9% |
| Embodiment 7 | 0.387 | 99.1% |
| Embodiment 8 | 0.321 | 99.4% |
| Embodiment 9 | 0.333 | 99.3% |
| Embodiment 10 | 0.325 | 98.7% |
| Embodiment 11 | 0.333 | 97.7% |
| Embodiment 12 | 0.331 | 98.5% |
| Embodiment 13 | 0.41 | 99.1% |
| Embodiment 14 | 0.341 | 98.6% |
| Embodiment 15 | 0.402 | 95.1% |
| Embodiment 16 | 0.32 | 94.7% |
| Embodiment 17 | 0.268 | 96.8 % |
| Comparative Example 1 | 0.4 | 93.3% |
| Comparative Example 2 | 0.313 | 94.3 % |
| Comparative Example 3 | 0.316 | 93.7 % |

The followings can be seen from the Table 1.

Compared with Embodiments 2 to 4, the capacity retention rate of the battery in Embodiment 1 is higher. It can be seen that the capacity retention rate of the battery can be improved by introducing lithium manganate and lithium transition metal phosphate into the first film layer.

Compared with Embodiment 15, the capacity retention rates of the batteries of Embodiments 1 and 5 to 8 are higher. It can be seen that the capacity retention rate of the battery can be adjusted by controlling the mass ratio of the lithium transition metal phosphate, lithium manganate, lithium-rich manganese-based material, the first conductive agent and the first adhesive agent in the first film layer.

Compared with Embodiment 16, the capacity retention rates of the batteries of Embodiments 1 and 9 to 12 are higher. It can be seen that the capacity retention rate of the battery can be adjusted by controlling the mass ratio of the lithium transition metal phosphate material, the lithium supplement agent, the second conductive agent and the second adhesive agent in the second film layer.

Compared with Embodiment 17, the capacity retention rates of the batteries of Embodiments 1, 13 and 14 are higher. It can be seen that the capacity retention rate of the battery can be adjusted by controlling the mass ratio of the second film layer to the first film layer.

Compared with Comparative Example 1, the capacity retention rates of the batteries in the embodiments are higher. It can be seen that the capacity retention rate of the battery can be improved by controlling the composition of the first film layer and the second film layer and arranging them on the current collector in a layered manner.

Compared with Comparative Example 2, the capacity retention rates of the batteries in the embodiments are higher. It can be seen that the capacity retention rate of the battery can be improved by arranging the first film layer and the second film layer on the current collector in a layered manner.

Compared with Comparative Example 3, the capacity retention rates of the batteries in the embodiments are higher. It can be seen that the capacity retention rate of the battery can be improved by sequentially arranging the first film layer and the second film layer on the current collector in a layered manner.

## Claims

1. A positive electrode sheet, comprising a current collector, and a first film layer and a second film layer sequentially arranged on the current collector, wherein a material of the first film layer comprises a lithium-rich manganese-based material, and a material of the second film layer comprises a lithium transition metal phosphate.

2. The positive electrode sheet according to claim 1, wherein the material of the first film layer further comprises a lithium manganate; and/or
wherein the material of the first film layer further comprises the lithium transition metal phosphate, and a mass ratio of the lithium transition metal phosphate to the lithium-rich manganese-based material in the first film layer is A:C, where 0<A≤40, 20<C<99.

3. The positive electrode according to claim 2, wherein a chemical formula of the lithium transition metal phosphate is LiMn_{(1-x-y)}FeₓM_{y} PO₄, where the M comprises one or more metal elements, 0.8≥1-x-y≥0.2, 0.8≥x≥0.2, y≤0.1; and/or
wherein a chemical formula of the lithium-rich manganese-based material is Li_{d}NiₐCo_{b}Mn_{c}A_{(1-a-b-c)}O₂, where the A comprises one or more metal elements, 1.5>d>0, 1≥a≥0, 0.3≥b≥0, 1≥c≥0, 0.1≥1-a-b-c; and/or
wherein a chemical formula of the lithium manganate is LiMn_{(2-y)} D_{y}O₄, where the D comprises one or more metal elements, and y≤0.1.

4. The positive electrode sheet according to claim 1, wherein the lithium transition metal phosphate is in a granular form, and a ratio of a minimum value to a maximum value of a Martin diameter of the lithium transition metal phosphate is in a range of (0.1~0.6):1; and/or
wherein the lithium transition metal phosphate is in a granular form, and a particle size D50 of the lithium transition metal phosphate is in a range from 0.5 µm to 2 µm; and/or
wherein the lithium-rich manganese-based material is in a granular form, and a ratio of a minimum value to a maximum value of a Martin diameter of the lithium-rich manganese-based material is in a range from 0.2 to 0.8; and/or
wherein a particle size D50 of primary particles of the lithium-rich manganese-based material is in a range from 100 nm to 800 nm, and a particle size D50 of secondary particles of the lithium-rich manganese-based material is in a range from 4 µm to 9 µm.

5. The positive electrode sheet according to claim 1, wherein the material of the second film layer further comprises a lithium supplement agent.

6. The positive electrode sheet according to claim 5, wherein the material of the first film layer further comprises a lithium manganate, the lithium transition metal phosphate, a first conductive agent and a first adhesive agent, and a mass percentage ratio of the lithium transition metal phosphate, the lithium manganate, the lithium-rich manganese-based material, the first conductive agent and the first adhesive agent in the first film layer is A:B:C:D:(1-A-B-C-D), where 0<A≤40%, 0≤B≤40%, 20%<C<99%, 0<D≤7%, 0<1-A-B-C-D≤7%; and/or
wherein the material of the second film layer further comprises a second conductive agent and a second adhesive agent, and a mass percentage ratio of the lithium transition metal phosphate, the lithium supplement agent, the second conductive agent and the second adhesive agent in the second film layer is X:Y:Z:(1-X-Y-Z), where 90%≤X≤98%, 0<Y≤1%, 0<Z≤3%, 0<1-X-Y-Z≤4%.

7. The positive electrode sheet according to claim 1, wherein a mass ratio of the second film layer to the first film layer is in a range of (3~18):2; and/or
wherein a ratio of a sum of a thickness of the first film layer and a thickness of the second film layer to a thickness of the current collector is in a range of (10~80):1; and/or
wherein a surface density of the first film layer is in a range from 20 g/m² to 120 g/m², and a surface density of the second film layer is in a range from 90 g/m² to 250 g/m².

8. A preparation method of a positive electrode sheet, comprising steps of:
providing a current collector and a first film layer slurry, and applying the first film layer slurry on at least one side of the current collector to obtain a first film layer on the current collector, wherein the first film layer slurry comprises a lithium-rich manganese-based material;
providing a second film layer slurry, and applying the second film layer slurry on a side of the first film layer facing away from the current collector to obtain the positive electrode sheet, wherein the second film layer slurry comprises a lithium transition metal phosphate.

9. The preparation method of the positive electrode sheet according to claim 8, wherein a preparation of the first film layer slurry comprises a step of:
mixing the lithium-rich manganese-based material, lithium manganate, a lithium transition metal phosphate, a first conductive agent, a first adhesive agent and a first solvent to obtain the first film layer slurry; and/or
wherein a preparation of the second film layer slurry comprises a step of:
mixing the lithium transition metal phosphate, a lithium supplement agent, a second conductive agent, a second adhesive agent and a second solvent to obtain the second film layer slurry.

10. A battery cell, comprising the positive electrode sheet according to any one of claims 1 to 7, or the positive electrode sheet prepared according to the preparation method of the positive electrode sheet according to claim 8 or 9.
